# EUROPÄISCHE PATENTANMELDUNG

(11) **EP 4 496 174 A2**
(43) Veröffentlichungstag der Anmeldung: **22.01.2025**
(21) Anmeldenummer: 24188192.9
(22) Anmeldetag: 12.07.2024
(51) Int. Cl.: H02J 7/00

(54) **BATTERIELADEVORRICHTUNG**

(30) Priorität: 21.07.2023 DE 102023119421
(71) Anmelder: Metabowerke GmbH, 72622 Nürtingen (DE)
(72) Erfinder: Wolf, Alexander, 73240 Wendlingen (DE); Müller, Matthias, 72285 Kälberbronn (DE)
(74) Vertreter: Markfort, Iris-Anne Lucie

(57) **Zusammenfassung**

Die Erfindung betrifft eine Batterieladevorrichtung (10) zum Laden einer oder mehrerer damit verbindbarer Batterien (100) eines spezifischen Batterietyps, wobei die Batterieladevorrichtung (10) modular aufgebaut ist und umfasst: ein Leistungsmodul, das ein Leistungsteil (20) umfasst, welches dazu eingerichtet ist, eine an eine oder mehrere zu ladende Batterien (100) abzugebende Ladeleistung bzw. Ladestrom einer Stromquelle (12) der Batterieladevorrichtung (10) bereitzustellen, sowie ein Steuermodul, das ein Steuerteil (40) umfasst, welches dazu eingerichtet ist, eine oder mehrere mit der Batterieladevorrichtung (10) verbundene Batterien (100) eines spezifischen Batterietyps zu ermitteln, und eine Kommunikationsschnittstelle (38) zwischen dem Leistungsmodul und dem Steuermodul, die eine Kommunikation des Steuerteils (40) mit dem Leistungsteil (20) ermöglicht, derart dass das Steuerteil (40) das Leistungsteil (20) steuert, um die eine oder mehreren mit der Batterieladevorrichtung (10) verbundenen Batterien (100) eines spezifischen Batterietyps gemäß ihres spezifischen Batterietyps mit Ladestrom zu versorgen.

## Beschreibung

Die Erfindung betrifft eine Batterieladevorrichtung zum Laden von einer oder mehreren verbundenen Batterien eines spezifischen Batterietyps wobei die Batterieladevorrichtung ein Leistungsteil und ein Steuerteil umfasst. Das Leistungsteil dient dazu, die an die verbundene eine oder mehreren Batterien abzugebende Ladeleistung bereitzustellen. Das Steuerteil dient dazu, angepasst an batteriespezifische Eigenschaften der verbundenen einen oder mehreren Batterien das Ladeverfahren zum Laden der verbundenen einen oder mehreren Batterien zu steuern.

Aus dem Stand der Technik sind Ladegeräte bekannt, die mithilfe eines Identifikationsmoduls eines Steuerkreises den spezifischen Typ einer angeschlossenen Batterie ermitteln und basierend darauf mithilfe eines MCU Mikrocontrollers des Steuerkreises einen Hauptstromkreis steuern, damit dieser gemäß einem vorgegebenen batteriespezifischen Ladeschema die angeschlossene Batterie auflädt. Eine solche Lösung ist beispielsweise in der CN 111740466 B beschrieben.

Weiterhin offenbart die WO 2009/007157 A1 eine Batterieladevorrichtung mit einer Ladestromerzeugungseinrichtung und einer Ladestromsteuerungseinrichtung. Die Ladestromsteuerungseinrichtung ist dazu eingerichtet, einen ersten Batterietyp eines erstes Batteriepakt zu erkennen, der Lithium-Ionen-Zellen auf Basis eines Übergangsmetalloxids aufweist, und einen zweiten Batterietyp eines zweites Batteriepakets zu erkennen, der Lithium-Ionen-Zellen auf Basis eines Metallphosphats aufweist, während die Ladestromerzeugungseinrichtung dazu eingerichtet ist, ein erstes Ladeverfahren anzuwenden, das für das erste Batteriepaket geeignet ist, und ein zweites Ladeverfahren anzuwenden, das für das zweite Batteriepaket geeignet ist.

Die Druckschrift DE 10 2013 201 221 A1 offenbart schließlich ein Energiespeichersystem mit einer Ansteuervorrichtung zum Laden einer ersten Blei-Batterie und zum Laden einer zweiten Lithium-Ionen-Batterie. Die Ansteuervorrichtung umfasst eine Management-Mastereinrichtung, welche zu einer Überwachung der Lithium-Ionen-Batterie dient. Dabei bestimmt die Management-Mastereinrichtung anhand von Messwerten und -daten, die von der Slave-Elektronik der Batterie an die Management-Mastereinrichtung übertragen werden, mithilfe von Modellen und Algorithmen Größen wie Ladezustand, Alterungszustand und Leistungsfähigkeit der Batterie. Die Management-Mastereinrichtung überträgt dann die Daten an eine übergeordnete Auswerte- und Steuereinheit. Die Management-Mastereinrichtung kann dabei entweder integraler Bestandteil der Batterie sein, oder im Falle der komplexer zu überwachenden Lithium-Ionen-Batterie kann die Management-Mastereinrichtung in die Ansteuervorrichtung integriert werden.

Während Ladegeräte, die zum Laden von unterschiedlichen spezifischen Batterietypen genutzt werden können, sehr sinnvoll sind, sind diese in der Praxis noch immer mit hohen Kosten auf der Herstellerseite verbunden, da für ein einziges Ladegerät mehrere Ladeverfahren (mit mehreren Modellen und Algorithmen zur Parametrierung und Regelung des jeweiligen Ladeverfahrens je nach Batterie) vorgesehen sind, die jeweils in der Entwicklung validiert und verifiziert werden müssen. In der Praxis erfordert die Entwicklung einer Batterieladevorrichtung mit einer spezifischen (mechanischen und elektrischen) Schnittstelle zum Laden einer oder mehrerer spezifischen Batterie(n) und mit den jeweiligen Modellen und Algorithmen zur Parametrierung und Regelung des jeweiligen Ladeverfahrens je nach Batterie einen großen Aufwand bei der Validierung und Verifizierung der Batterieladevorrichtung anhand einer Ladegerätespezifikation, um deren sicheren Gebrauch durch den Anwender bereitzustellen. Dabei nachteilig ist insbesondere, dass diese bei jedem Wechsel des Herstellers oder Lieferanten für Batterieladevorrichtungen aber auch bei jeder Neuentwicklung einer Batterieladevorrichtung inklusive der Erstellung einer neuen Software für das Ladeverfahren erforderlich sind.

Demgegenüber besteht eine Aufgabe der Erfindung darin, den verbundenen Aufwand der Validierung und Verifizierung der Batterieladevorrichtung zu reduzieren.

Diese Aufgabe wird durch eine Batterieladevorrichtung mit den Merkmalen des Anspruchs 1 sowie ein Batterieladesystem umfassend eine Batterieladevorrichtung und wenigstens eine oder mehrere verbindbare Batterien gemäß Anspruch 9 gelöst.

Dabei bezeichnet der Begriff Batterie jegliche Art von aufladbaren und wiederaufladbaren Batterien, d.h. unter anderem einzelne Zellen wie auch Zellen im Verbund (Pack) oder mehrere Batteriepacks im Verbund miteinander. Die Form und Anordnung der Zellen in einem Pack hat dabei für Erfindungsgegenstand keine nennenswerten Auswirkungen, d.h. davon umfasst sind beispielsweise auch sogenannte zylindrische Zellen, prismatische Zellen oder Pouch-Zellen. Weiterhin sind auch alle erdenklichen spezifischen Arten von Batteriezellen durch den Begriff Batterie umfasst, d.h. beispielsweise Lithium-Ionen-Batteriezellen auf Basis eines Metallphosphats oder Lithium-Ionen-Batteriezellen auf Basis eines Übergangsmetalloxids, NiCd-Zellen oder NiMH-Zellen.

Eine Batterie eines spezifischen Batterietyps bezeichnet dabei eine Batterie, die ein an ihre batteriespezifischen Eigenschaften oder Teile angepasstes Ladeverfahren erfordert. Somit sind Batterien eines spezifischen Batterietyps im Sinne der vorliegenden Anmeldung dem gleichen spezifischen Batterietyps zuzuordnen, wenn sie mit dem gleichen batteriespezifischen Ladeverfahren geladen werden.

Die erfindungsgemäße Batterieladevorrichtung unterscheidet sich dadurch von bekannten Vorrichtungen, dass sie einen modularen Aufbau aufweist, wobei das Leistungsmodul, das wenigstens ein Leistungsteil umfasst, unabhängig von dem Steuermodul, das wenigstens ein Steuerteil umfasst, vorgesehen ist, derart, dass die Validierung und Verifizierung des Leistungsmoduls unabhängig von der Validierung und Verifizierung des Steuermoduls durchgeführt werden kann. Auf diese Weise ist es möglich, das Leistungsmodul und das Steuermodul und folglich auch das wenigstens eine Leistungsteil und das wenigstens eine Steuerteil unabhängig voneinander zu entwickeln und zu validieren und verifizieren. Im Nachgang muss bei jeder ReKombination jeweils eines validierten und verifizierten Leistungsteils mit einem validierten und verifizierten Steuerteil nur noch die zugehörige Schnittstelle, über die die beiden Module miteinander kommunizieren, auf die geforderten Funktionen hin validiert und verifiziert werden, was im Umfang einen Bruchteil des bislang erforderlichen Validierungs- und Verifikationsaufwandes bei einer Entwicklung einer Batterieladevorrichtung darstellt.

Auf diese Weise können eine Vielzahl von hersteller- und batteriespezifischen Batterieladevorrichtungen mit einem vergleichsweise geringen Aufwand entwickelt werden, da die einzelnen verifizierten und validierten Module sich mit geringem Aufwand rekombinieren lassen. Für die abschließende Verifizierung und Qualifikation der Kommunikations-Schnittstelle reicht gegebenenfalls ein automatisiertes Testverfahren aus. Insbesondere können dabei auch Module unterschiedlicher Hersteller miteinander kombiniert werden.

Dabei dient das wenigstens eine Leistungsteil (nachfolgend auch als "Charger Controller" bezeichnet) dazu, eine oder mehrere verbundene, d.h. elektrisch angeschlossene; Batterien eines spezifischen Typs gemäß einem spezifischen Ladeverfahren mit einer Ladeladeleistung einer Leistungsquelle bzw. Stromquelle der Batterieladevorrichtung, d.h. mit Ladestrom bzw. Ladespannung, zu versorgen. Dabei kann das Leistungsteil die Stromquelle ansteuern, die wiederum mit den zu ladenden Batterien elektrisch verbunden ist. Über optionale Sensoren kann das Leistungsteil den an die Batterie(n) abgegebenen Ladestrom und/oder die Ladespannung (IST) ermitteln und mit einem gemäß dem Ladeverfahren vorgegebenen SOLL-Wert abgleichen. Entsprechend kann die Stromquelle von dem Leistungsteil geregelt werden.

In Hinblick auf die Leistungstopologie liegt auch hier wie bei aus dem Stand der Technik bekannten Lösungen eine Master-Slave-Topologie vor, bei der die Batterieladevorrichtung den Master gegenüber der wenigstens einen zu ladenden und verbundenen Batterie als Slave bildet. Jedoch kann in Hinblick auf die Kommunikationstopologie das wenigstens eine Leistungsteil als von dem wenigstens einen Steuerteil separierte selbstständige Einheit, welche von dem wenigstens einen Steuerteil gesteuert werden kann, zur Slave-Einheit werden, während das wenigstens eine Steuerteil in diesem Fall zur Master-Einheit für das damit verbundene wenigstens eine Leistungsteil wird.

Das wenigstens eine Steuerteil (nachfolgend auch als "Application Controller" bezeichnet) dient dazu, beispielsweise über eine Datenschnittstelle, batteriespezifische Daten der zu ladenden Batterie(n) zu ermitteln. Anhand dessen kann das Steuerteil feststellen, ob die verbundenen Batterien dem batteriespezifischen Typ der Batterieladevorrichtung entsprechen, und auf diese Weise sicherzustellen, dass nur die Batterien geladen werden, auf die das batteriespezifische Ladeverfahren der Batterieladevorrichtung anwendbar ist. Darüber hinaus umfasst das Steuerteil die Steuerung der spezifischen Teile einer Batterie eines spezifischen Batterietyps. Das Steuerteil kann auch für Batterien unterschiedlicher spezifischer Batterietypen unterschiedliche Steuerungen umfassen, beispielsweise für Batterien eines ersten spezifischen Batterietyps eine erste Steuerung und für Batterien eines zweiten spezifischen Batterietyps eine zweite Steuerung. Selbstverständlich kann das Steuerteil auch für mehr als zwei unterschiedliche Batterietypen geeignet sein. Das Steuerteil kann insbesondere auf eine Vielzahl (n) von Batterietypen skaliert werden.

Das Steuerteil steuert das Leistungsteil vergleichbar einem steuerbaren Netzteil mit einer Spannungs- und Stromregelung mit Hilfe von Steuersignalen, die über die Kommunikationsschnittstelle von dem Steuermodul auf das Leitungsmodul übertragen werden.

Gemäß einer denkbaren Lösung sind das Steuermodul und das Leistungsmodul in einem einzigen Mikrocontroller bereitgestellt, bei dem die modulare Aufteilung des Charge Controller und des Application Controller sowie die Kommunikations-Schnittstelle in Form von aufgespielter Software umgesetzt sind. Bevorzugt umfasst jedoch das Steuermodul einen ersten Mikrocontroller und das Leistungsmodul einen zweiten Mikrocontroller, die separat voneinander (d.h. physisch getrennt) ausgebildet sind und über eine digitale Kommunikations-Schnittstelle (nachfolgend auch als "Com. Interface" bezeichnet) miteinander kommunizieren.

Gerade durch diese Ausgestaltung ist eine unabhängige Entwicklung von Steuermodul und Leistungsmodul möglich. Dabei ist die Entwicklung frei von Vorgaben zur Auswahl eines bestimmten Mikrocontrollers.

Wie vorstehend erwähnt, kann weiterhin vorgesehen sein, dass das Steuermodul dazu eingerichtet ist, über eine Datenschnittstelle batteriespezifische Daten mit einer oder mehreren verbundenen Batterien auszutauschen.

Alternativ oder zusätzlich kann das Leistungsmodul dazu eingerichtet sein, über eine Datenschnittstelle Sensordaten eines Temperatursensors zur Erfassung der Batterietemperatur einer oder mehrerer verbundener Batterien zu empfangen.

Weiterhin kann auch vorgesehen sein, dass mehrere Steuerteile vorgesehen sind. Insbesondere kann das Steuermodul eine Anzahl von n Steuerteilen aufweisen (wobei eine n eine ganze Zahl bezeichnet), wobei jedem Steuerteil wenigstens eine mit der Batterieladevorrichtung verbindbare Batterie eines für das Steuerteil spezifischen Batterietyps zugeordnet ist.

Insbesondere kann bei dieser Gestaltung vorgesehen sein , dass das Leistungsmodul ein einziges Leistungsteil umfasst, wobei jeder der n Steuerteile über eine Kommunikationsschnittstelle mit dem Leistungsteil in Verbindung steht.

Dabei dient das eine Leistungsteil (Slave) als Energielieferant für die (Master-) Steuerteile 1 bis n. Die Regelung der Energiebereitstellung übernimmt das jeweilige Master-Steuerteil für die jeweils verbundene Batterie, um diese sicher zu laden. Das jeweilige Master-Steuerteil erhält die für ein sicheres und effizientes Laden benötigten Parameter von der wenigstens einen verbundenen Batterie. Die jeweiligen Parameter und spätere Algorithmen sind herstellerseitig bereits validiert und verifiziert. Gemäß einer denkbaren Weiterbildung der Erfindung können beispielsweise über eine Drahtloskommunikation (W-LAN, Bluetooth (LE), Narrowband, NFC) vom Anwender auf seine Bedürfnisse angepasst die Paramater und Algorithmen auch ausgelesen und ggf. innerhalb definierter Grenzen auch eingestellt bzw. mit anderen validierten und verifizierten Parametern und Algorithmen überschrieben werden.

Aufgrund der erfindungsgemäßen Möglichkeit, das wenigstens eine Steuerteil unabhängig von dem wenigstens einen Leistungsteil als separierte Einheit modular zu gestalten, kann das wenigstens eine Steuerteil herstellerspezifische Parameter der verbundenen Batterie auslesen und verarbeiten, welche wiederum als Basis für die Ansteuerung des Leistungsteils (als Slave) dienen. Auf diese Weise können unterschiedliche Steuermodule zum Laden unterschiedlicher Batterien (Batterien eines unterschiedlichen spezifischen Batterietyps) und unterschiedlicher Hersteller zu einer einzigen Batterieladevorrichtung konfiguriert werden, die alle auf beispielsweise nur ein einziges Leistungsteil der Batterieladevorrichtung zugreifen.

Alternativ kann jedoch auch vorgesehen sein, dass das Leistungsmodul wenigstens zwei Leistungsteile umfasst, wobei wenigstens ein erstes der n Steuerteile über eine erste Kommunikationsschnittstelle mit dem ersten Leistungsteil in Verbindung steht, und wobei wenigstens ein weiteres der n Steuerteile über eine weitere Kommunikationsschnittstelle mit dem weiteren Leistungsteil in Verbindung steht.

Insbesondere kann hier jedes der n Steuerteile einem eigenen Leistungsteil zugeordnet sein.

Durch das Vorsehen von wenigstens zwei Leistungsteilen wird eine kaskadierbare Modullösung geschaffen, die ein schnelleres Laden der verbundenen Batterien ermöglicht, da hier kein sequentielles Laden der Batterien über ein einziges Leistungsteil erforderlich ist. Selbstverständlich können dabei auch nur manche der n Steuerteile einem eigenen Leistungsteil zugeordnet sein und weitere Steuerteile gemeinsam auf eines oder mehrere Leistungsteile zugreifen.

Die Bereitstellung der Leistung bzw. Ladeenergie von einer Gleichstrom- und/oder Wechselstromquelle kann im Falle mehrerer (n) Steuerteile sequenziell oder parallel mit einem oder mehreren Leistungsmodulen und einem oder mehreren Leistungsteilen erfolgen, bis die jeweiligen verbundenen Batterien vollständig geladen sind. Hierzu können kaskadierte (Master-) Steuerteile priorisiert werden.

Eine weitere Möglichkeit ist eine sogenannte "Timeslot"- Algorithmik zu aktivieren. Diese zeitbasierende Algorithmik bedeutet das jede mit der Batterieladevorrichtung verbundene zu ladende Batterie sequentiell für eine parametrierbare Zeitdauer mit einer bis zu einer maximal verfügbaren Ladeleistung geladen wird. Danach wird das nächste (Master-)Steuerteil aktiviert und erhält die Möglichkeit, die damit verbundene Batterie zu laden. Ziel dieser Algorithmik ist das alle verbundenen Batterien zur möglichst zeitgleich vollständig bzw. bis zu einem vorgegebenen Wert (beispielsweise 80%) geladen sind.

Unabhängig von den vorherigen Weiterentwicklungen der Erfindung, aber auch in Kombination mit diesen kann weiter vorgesehen sein, dass die Batterieladevorrichtung eine Notabschaltung aufweist, die dazu eingerichtet ist, über eine Datenschnittstelle Sensordaten eines Temperatursensors zur Erfassung der Batterietemperatur einer oder mehrerer verbundener Batterien zu empfangen und bei Überschreiten eines vorgegebenen Schwellenwertes die Stromzuführung von der Stromquelle der Batterieladevorrichtung zu deaktivieren.

Ergänzend sei darauf hingewiesen, dass Begriffe, wie "umfassend", "aufweisen" oder "mit" keine anderen Merkmale oder Schritte ausschließen. Ferner schließen Begriffe "ein" oder "das", die auf einer Einzahl von Schritten oder Merkmalen hinweisen, keine Mehrzahl von Merkmalen oder Schritten aus und umgekehrt.

Weitere Merkmale und Vorteile der Erfindung ergeben sich aus der nachfolgenden Beschreibung eines Ausführungsbeispiels der Erfindung sowie aus den Unteransprüchen.

Die Erfindung ist nachfolgend unter Bezugnahme auf die beigefügten Figuren näher beschrieben. Die Figuren zeigen mehrere Merkmale der Erfindung in Kombination miteinander. Selbstverständlich vermag der Fachmann diese jedoch auch losgelöst voneinander zu betrachten und gegebenenfalls zu weiteren sinnvollen Unterkombinationen zu kombinieren, ohne dass er hierfür erfinderisch tätig werden müsste.

Die Figur zeigen schematisch:
- Figur 1: ein Schaltbild einer erfindungsgemäßen Batterieladevorrichtung;
- Figur 2: eine Darstellung der Topologie der erfindungsgemäßen Batterieladevorrichtung der Figur 1;
- Figur 3: eine Darstellung der Topologie einer erfindungsgemäßen Batterieladevorrichtung einer zweiten Ausführungsform; und
- Figur 4: eine Darstellung der Topologie einer erfindungsgemäßen Batterieladevorrichtung einer dritten Ausführungsform;

Die Figuren zeigen eine Batterieladevorrichtung, die allgemein mit dem Bezugszeichen 10 bezeichnet ist. An der Batterieladevorrichtung kann eine aufladbare Batterie 100 zum Aufladen angebracht sein. Selbstverständlich ist es auch möglich, mehr als eine einzige Batterie eines spezifischen Batterietyps zu laden, in der Darstellung der Figur ist zur Vereinfachung nur eine Batterie gezeigt. Bei der zu ladenden Batterie 100 kann es sich insbesondere um eine Batterie für eine angetriebene Werkzeugmaschine (Powertool Battery Pack) handeln.

Die Batterieladevorrichtung 10 umfasst eine Hauptstromquelle 12 mit einem Spannungswandler (AC/DC) 14, von dem aus eine Hilfsstromquelle (Aux Power) 16 über eine Zuleitung 14a mit Strom bzw. Spannung versorgt wird. Über die Leitungen 16a, 16b werden die nachfolgend näher beschriebenen Elemente 20, 40 wiederum von der Hilfsstromquelle 16 mit Strom bzw. Spannung versorgt.

Weiterhin dient der von dem Spannungswandler 14 umgewandelte Gleichstrom als Ladestrom für eine oder mehrere angeschlossene Batterien 100, die über eine Zuleitung 14b an einer Ladeschnittstelle (auch Batterieschnittstelle genannt) 18 in bekannter Weise mit dem Spannungswandler 14 elektrisch verbunden werden können. Wie bereits vorstehend erwähnt, ist in der gezeigten Ausführungsform zur Vereinfachung der Darstellung nur eine Ladeschnittstelle 18 gezeigt, an die eine Batterie 100 angeschlossen werden kann. Alternativ können aber auch mehrere Ladeschnittstellen 18 vorgesehen sein, um gleichzeitig mehrere Batterien zu laden. Entsprechend können an jeder der Ladeschnittstellen die nachfolgenden Merkmale vorgesehen sein, die einen Daten- und Informationsaustausch mit den elektronischen Komponenten 20, 40 der Batterieladevorrichtung zur Steuerung des Ladestroms und Ladeverfahrens ermöglichen.

Wie bereits vorstehend angegeben, kann an der Ladeschnittstelle 18 eine wiederaufladbare Batterie 100 angeschlossen sein, derart dass die Batteriepole 102a und 102b in einen von der Hauptstromquelle 12 mit Strom versorgten Ladestromkreis geschlossen werden. Weiterhin sind an der Ladeschnittstelle 18 Datenschnittstellen 104a, 104b für die Übertragung von Sensordaten eines oder mehrerer Temperatursensoren (NTC+ und NTC-) zur Temperaturerfassung der Batterietemperatur einer angeschlossenen Batterie 100 vorgesehen sowie eine Datenschnittstelle (D) 106 zum Austausch von batteriespezifischen Daten mit der angeschlossenen Batterie 100 über die Leitung 42.

Ein zentraler Erfindungsgedanke der vorliegenden Lösung ist darin zu sehen, dass die Batterieladevorrichtung 10 modular aufgebaut ist und ein Leistungsmodul sowie ein Steuermodul umfasst. Das Leistungsmodul umfasst ein Leistungsteil, das in der Figur auch als "Charger Controller" bezeichnet und mit dem Bezugszeichen 20 versehen ist, während das Steuermodul ein Steuerteil umfasst, das in der Figur auch als "Application Controller" bezeichnet und mit dem Bezugszeichen 40 versehen ist.

Das Leistungsteil 20 ist dazu eingerichtet ist, einen an die angeschlossene Batterie 100 abzugebenden Ladestrom zu regeln. Dabei nutzt das Leistungsteil 20 zur Regelung des Ladestroms Informationen über den an der Batterieschnittstelle 18 abgegebenen Ladestrom. So erhält das Leistungsteil zunächst über eine Leitung 26 und Sensorleitungen 22, 24 eine Rückmeldung über Strom- und Spannungswerte des auf der Leitung 14b anliegenden Ladestroms und steuert über eine weitere Leitung 28 den Spannungswandler 14 an.

Weiterhin kann bei der Regelung des Spannungswandlers Spannungswandler14 durch das Leistungsteil 20 die gemessene Batterietemperatur berücksichtigt werden. Dabei kann eine von dem Leistungsteil 20 ausgehende Informationsleitung 34 auf die Datenleitung einer nachfolgend näher beschriebenen Notabschaltung 50 zugreifen, die Sensordaten bezüglich der Batterietemperatur einer angeschlossenen Batterie 100 an die Notabschaltung 50 weiterleitet. Schließlich kann über eine optionale Datenleitung 42a auch ein Austausch von batteriespezifischen Daten mit der angeschlossenen Batterie 100 erfolgen, so dass deren Daten bei der Regelung berücksichtigt werden können, wenn das Steuerteil 40 ausfallen sollte.

Ein optionaler Lüfter (auch als "Fan" bezeichnet) 32 kann zur Kühlung der Batterieladevorrichtung 10, insbesondere der elektronischen Komponenten der Batterieladevorrichtung 10, genutzt werden, wobei dieser ebenfalls von dem Leistungsteil 20 angesteuert werden kann. Schließlich kann optional wenigstens eine LED 36 vorgesehen sein (in der dargestellten Ausführungsform als "red & green LED" bezeichnet), die durch Verwendung einer Farbcodierung dem Anwender optische Informationen darüber gibt, ob die angeschlossene Batterie 100 ausreichend geladen ist oder nicht. Auch diese wenigstens eine LED 36 kann von dem Leistungsteil 20 angesteuert werden.

Das Steuerteil 40 ist dazu eingerichtet, eine oder mehrere mit der Batterieladevorrichtung 10 verbundene Batterien 100 zu ermitteln. Hierzu greift das Steuerteil 40 über die Datenleitung 42 auf die Datenschnittstelle 106 zu und tauscht hierüber batteriespezifische Daten mit der angeschlossenen Batterie 100 aus. Unter anderem wird auf diese Weise der spezifische Batterietyp ermittelt und anhand dessen ein batteriespezifisches Ladeverfahren vorgegeben. Das Steuerteil 40 und das Leistungsteil 20 stehen in der gezeigten Ausführungsform über eine Kommunikationsschnittstelle ("Com. Interface") 38 im Austausch miteinander, so dass das Steuerteil 40 das Leistungsteil 20 steuern kann, um die eine oder alternativ mehrere mit der Batterieladevorrichtung 10 verbundene Batterien 100 eines spezifischen Batterietyps gemäß ihres spezifischen Batterietyps mit Ladestrom zu versorgen.

Das Steuerteil 40 kann weiterhin mit einem optionalen Wireless-Modul 60 im bilateralen Austausch stehen. Das Wireless-Modul 60 kann über eine oder mehrere Schnittstellen mit einem oder mehreren mobilen Geräten über ein Kommunikationsnetz, beispielsweise WiFi/WLAN, kommunizieren. Auf diese Weise kann das Lagegerät in das Internet der Dinge (Internet of Things (IOT)) eingebunden werden.

In der gezeigten Ausführungsform sind das Leistungsteil 20 und das Steuerteil 40 jeweils als Mikrocontroller ausgebildet. Alternativ können diese auch ohne physische Trennung in einem einzigen Mikrocontroller realisiert sein, wobei diese dann über eine Softwarekommunikationsschnittstelle miteinander in Austausch stehen.

Um der Möglichkeit eines Ausfalls von einem oder beiden Mikrocontrollern 20, 40 weiter Rechnung zu tragen, ist schließlich auch die Notabschaltung 50 der Strombereitstellung durch den Spannungswandler 14 vorgesehen, die die Sensordaten des Temperatursensors zur Erfassung der Batterietemperatur einer oder mehrerer verbundener Batterien 100 über eine Informationsleitung erhält und bei Überschreiten eines bestimmten Schwellenwerts für die Batterietemperatur einer oder mehrerer verbundener Batterien 100 eine automatische Abschaltung der Leistungs- bzw. Stromzuführung ermöglicht.

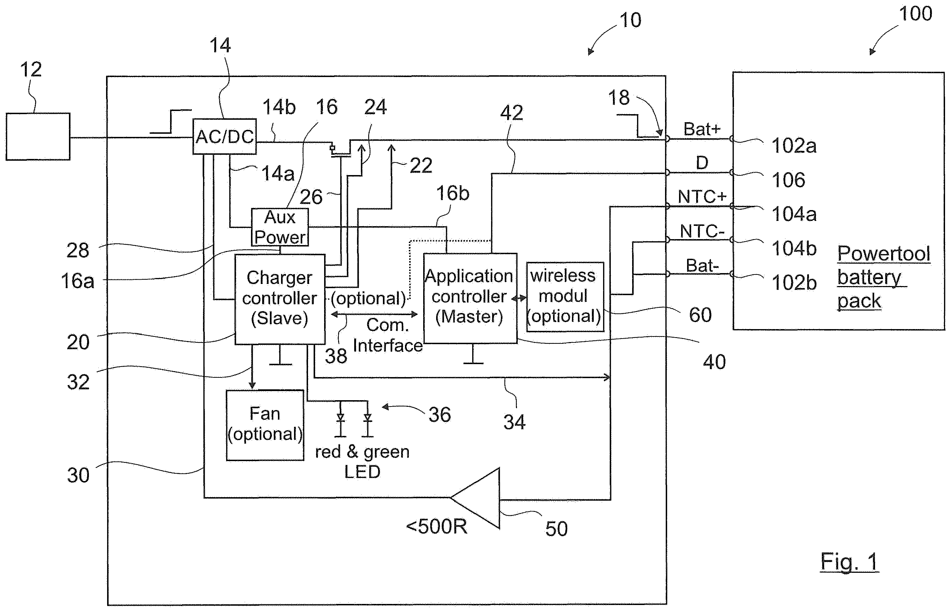

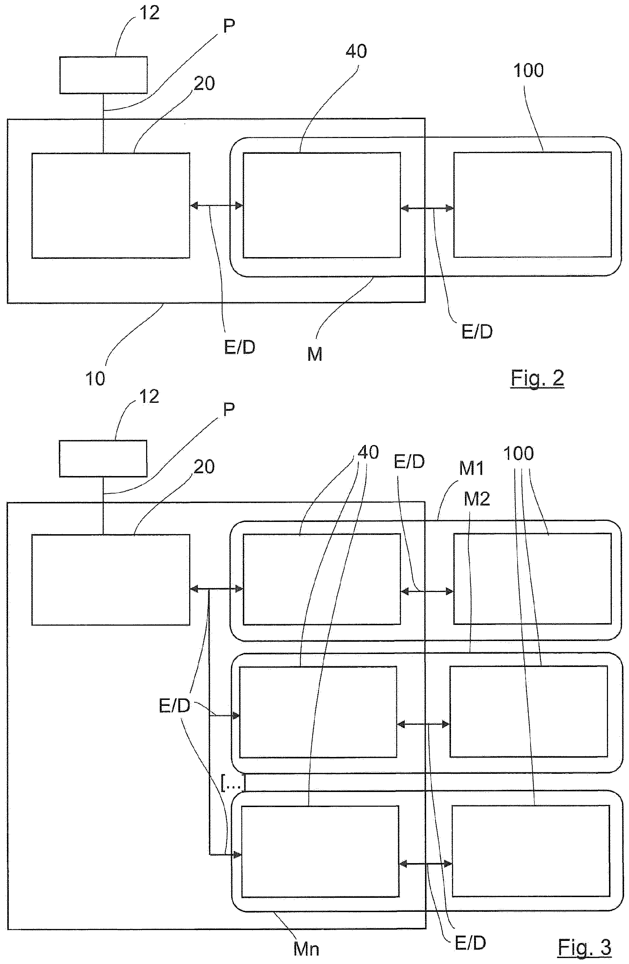

Die Figur 2 zeigt in vereinfachter Weise die Topologie der Ausführungsform der Figur 1. Man erkennt, dass das Leistungsteil 20 von der Hauptstromquelle 12 über eine Zuleitung mit Strom bzw. Spannung versorgt wird. Dies ist angedeutet durch die mit P bezeichnete Verbindungslinie. Weiterhin steht das Leistungsteil in Kommunikationsverbindung mit einem Steuerteil 40, wobei in der gezeigten Darstellung die Kommunikationsverbindung zum Austausch von Energie und Daten bidirektional genutzt werden kann (angedeutet durch den Doppelpfeil E/D). Das Steuerteil 40 und das Leistungsteil 20 sind separat voneinander als losgelöste Einheiten ausgebildet und beide der Batterieladevorrichtung 10 zugeordnet.

Das Steuerteil 40 steht zudem in Kommunikationsverbindung mit einer wiederaufladbaren Batterie 100, wobei in der gezeigten Darstellung die Kommunikationsverbindung zum Austausch von Energie und Daten bidirektional genutzt werden kann (angedeutet durch den Doppelpfeil E/D). Funktional bilden die Batterie 100 eines spezifischen Batterietyps und das zugeordnete Steuerteil 40, das Modelle und Algorithmen (d.h. die Software) zur Steuerung des Ladeverfahren für diesen spezifischen Batterietyp aufweist, ein Modul M.

Kommunikationstopologisch bildet das Steuerteil 40 ein Master-Steuerteil, das anhand der Modelle und Algorithmen dazu ausgebildet ist, das Leistungsteil 20 (Slave) für ein an die Batterie des spezifischen Batterietyps angepasstes Ladeverfahren zu steuern.

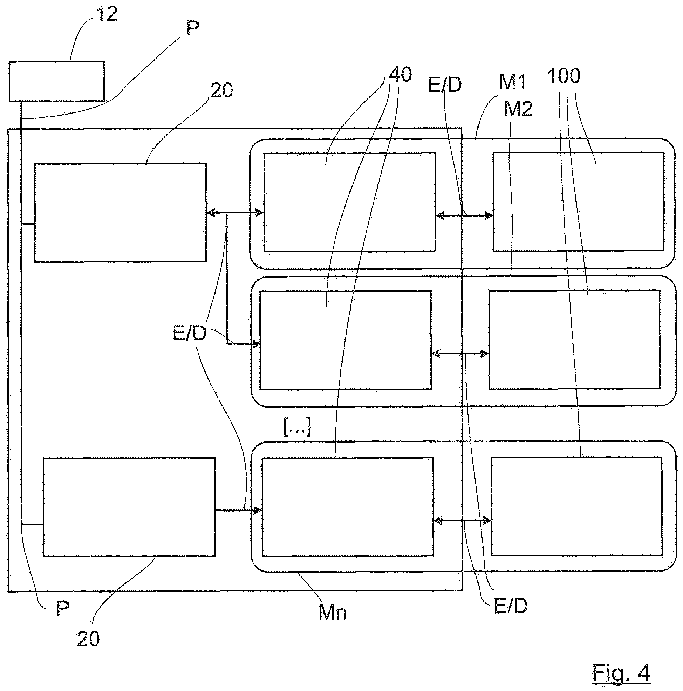

Die losgelöste Ausbildung von Steuerteil 40 und Leistungsteil 20 ermöglicht den funktionell modularen Aufbau der Anordnung und im Falle einer Variante gemäß den Figuren 3 und 4 mit mehreren (bis zu n) Steuerteilen 40 auch die einfache Kombination und Rekombination einer Batterieladevorrichtung mit mehreren (angedeutet durch "n" für eine ganze Zahl) unterschiedlichen Modulen M1, M2, Mn. Die funktionellen Module können dabei die Ausgestaltung einer Batterieschnittstelle 18 wie auch insbesondere die Ausgestaltung des jeweiligen Steuerteils 40 für eine Batterie eines spezifischen Batterietyps umfassen. Auf diese Weise können in einer Batterieladevorrichtung 10 auch mehrere funktionelle Module unterschiedlicher Hersteller zusammengefasst werden. Zugleich wird der Validierung- und Verifikationsaufwand gering gehalten, wie eingangs erläutert.

Wie anhand der Figuren 3 und 4 erkannt werden kann, können mehrere Steuerteile vorgesehen sein. Insbesondere kann das Steuermodul eine Anzahl von n Steuerteilen 40 aufweisen (gezeigt sind vorliegen 3, wobei durch das Zeichen [...] angedeutet sein soll, dass auch mehr Steuerteile, nämlich bis zu n Steuerteile und entsprechend n Batterien vorgesehen sein können), wobei jedem Steuerteil wenigstens eine mit der Batterieladevorrichtung verbindbare Batterie 100 eines für das Steuerteil 40 spezifischen Batterietyps zugeordnet sein kann, wie in den Figuren 3 und 4 gezeigt.

Insbesondere kann bei dieser Gestaltung vorgesehen sein , dass das Leistungsmodul ein einziges Leistungsteil 20 umfasst, wobei jeder der n Steuerteile über eine Kommunikationsschnittstelle (angedeutet durch die Doppelpfeile E/D) mit dem Leistungsteil in Verbindung steht, um wie bei der Ausführungsform der Figur 2 Energie und Daten bidirektional austauschen zu können.

Dabei dient das eine Leistungsteil (Slave) 20 als Energielieferant für die n (Master-) Steuerteile 40. Die Regelung der Energiebereitstellung übernimmt das jeweilige Master-Steuerteil 40 für die jeweils verbundene Batterie 100, um diese sicher zu laden. Demgemäß bildet das jeweilige Master-Steuerteil 40 mit der jeweils verbundenen Batterie 100 in den Figuren 3 und 4 jeweils ein funktionelles Modul M1, M2, Mn aus.

Das jeweilige Master-Steuerteil 40 erhält die für ein sicheres und effizientes Laden benötigten Parameter von der wenigstens einen verbundenen Batterie 100. Die jeweiligen Parameter und spätere Algorithmen sind herstellerseitig bereits validiert und verifiziert. Gemäß einer denkbaren Weiterbildung der Erfindung (nicht dargestellt) können beispielsweise über eine Drahtloskommunikation (W-LAN, Bluetooth (LE), Narrowband, NFC) vom Anwender auch auf seine Bedürfnisse angepasst die Paramater und Algorithmen auch ausgelesen und ggf. innerhalb definierter Grenzen auch eingestellt bzw. mit anderen validierten und verifizierten Parametern und Algorithmen überschrieben werden.

Aufgrund der erfindungsgemäßen Möglichkeit, das wenigstens eine Steuerteil 40 unabhängig von dem wenigstens einen Leistungsteil 20 als separierte Einheit modular zu gestalten, kann das wenigstens eine Steuerteil 40 herstellerspezifische Parameter der verbundenen Batterie 100 auslesen und verarbeiten, welche wiederum als Basis für die Ansteuerung des Leistungsteils 20 (als Slave) dienen. Auf diese Weise können unterschiedliche Steuermodule zum Laden unterschiedlicher Batterien (Batterien eines unterschiedlichen spezifischen Batterietyps) und unterschiedlicher Hersteller zu einer einzigen Batterieladevorrichtung konfiguriert werden, die alle auf beispielsweise nur ein einziges Leistungsteil der Batterieladevorrichtung zugreifen.

Alternativ kann jedoch auch vorgesehen sein, dass das Leistungsmodul wenigstens zwei Leistungsteile 20 umfasst, wobei wenigstens ein erstes der n Steuerteile 40 über eine erste Kommunikationsschnittstelle mit dem ersten Leistungsteil 20 in Verbindung steht, und wobei wenigstens ein weiteres der n Steuerteile 40 über eine weitere Kommunikationsschnittstelle mit dem weiteren Leistungsteil 20 in Verbindung steht. Die beiden Leistungsteile 20 können wie in der Figur 4 erkennbar jeweils von der Hauptstromquelle 12 mit Leistung P versorgt werden.

Insbesondere kann jedes der n Steuerteile 40 einem eigenen Leistungsteil 20 zugeordnet sein. Hierdurch kann eine kaskadierbare Modullösung geschaffen werden, die ein schnelleres Laden den verbundenen Batterien 100 ermöglicht, da hier kein sequentielles Laden der Batterien 100 über ein einziges Leistungsteil 20 erforderlich ist. Selbstverständlich können auch nur manche der n Steuerteile einem eigenen Leistungsteil zugeordnet sein und weitere gemeinsame auf eines oder mehrere Leistungsteile zugreifen, wie in der Figur 4 gezeigt.

Die Bereitstellung der Leistung bzw. Ladeenergie von einer Gleichstrom- und/oder Wechselstromquelle als Hauptstromquelle 12 kann im Falle mehrerer (n) Steuerteile 40 sequenziell oder parallel mit einem oder mehreren Leistungsmodulen und einem oder mehreren Leistungsteilen 20 erfolgen, bis die jeweiligen verbundenen Batterien 100 vollständig geladen sind. Hierzu können kaskadierte (Master-) Steuerteile 40 priorisiert werden.

Eine weitere Möglichkeit ist eine sogenannte "Timeslot"- Algorithmik zu aktivieren. Diese zeitbasierende Algorithmik bedeutet das jede mit der Batterieladevorrichtung verbundene zu ladende Batterie sequentiell für eine parametrierbare Zeitdauer mit einer vorgegebenen (bis zur maximalen) Ladeleistung geladen wird. Danach wird das nächste (Master-)Steuerteil aktiviert und erhält die Möglichkeit, die damit verbundene Batterie zu laden. Ziel dieser Algorithmik ist das alle verbundenen Batterien zur möglichst zeitgleich vollständig bzw. bis zu einem vorgegebenen Wert (beispielsweise 80%) geladen sind.

## Patentansprüche

1. Batterieladevorrichtung (10) zum Laden einer oder mehrerer damit verbindbarer Batterien (100) eines spezifischen Batterietyps, wobei die Batterieladevorrichtung (10) modular aufgebaut ist und umfasst:
ein Leistungsmodul, das wenigstens ein Leistungsteil (20) umfasst, welches dazu eingerichtet ist, einen an eine oder mehrere zu ladende Batterien (100) abzugebende Ladestrom einer Stromquelle (12) der Batterieladevorrichtung (10) bereitzustellen, sowie
ein Steuermodul, das wenigstens ein Steuerteil (40) umfasst, welches dazu eingerichtet ist, eine oder mehrere mit der Batterieladevorrichtung verbundene Batterien (100) eines spezifischen Batterietyps zu ermitteln,
und eine Kommunikationsschnittstelle (38) zwischen dem Leistungsmodul (20) und dem Steuermodul (40), die eine Kommunikation des Steuerteils (40) mit dem Leistungsteil (20) ermöglicht, derart dass das Steuerteil (40) das Leistungsteil (20) steuert, um die eine oder mehreren mit der Batterieladevorrichtung verbundenen Batterien (100) eines spezifischen Batterietyps gemäß ihres spezifischen Batterietyps mit Ladestrom zu versorgen,
und wobei das wenigstens eine Leistungsteil (20) unabhängig von dem wenigstens einen Steuerteil (40) ausgebildet ist und eine hiervon separate Einheit bildet.

2. Batterieladevorrichtung (10) nach Anspruch 1,
wobei das Leistungsmodul einen ersten Mikrocontroller umfasst und das Steuermodul einen zweiten Mikrocontroller umfasst, wobei der erste Mikrocontroller und der zweite Mikrocontroller über eine digitale Kommunikationsschnittstelle (38) miteinander kommunizieren.

3. Batterieladevorrichtung (10) nach Anspruch 1 oder 2,
wobei das Steuermodul dazu eingerichtet ist, über eine Datenschnittstelle (106) batteriespezifische Daten einer oder mehrerer verbundener Batterien (100) zu empfangen.

4. Batterieladevorrichtung (10) nach einem der vorhergehenden Ansprüche,
wobei das Leistungsmodul dazu eingerichtet ist, über eine Datenschnittstelle (104a, 104b) Sensordaten eines Temperatursensors zur Temperaturerfassung der Batterietemperatur einer oder mehrerer verbundener Batterien zu empfangen.

5. Batterieladevorrichtung (10) nach einem der vorhergehenden Ansprüche,
wobei das Steuermodul eine Anzahl von n Steuerteilen (40) aufweist, wobei jedem Steuerteil (40) wenigstens eine mit der Batterieladevorrichtung (10) verbindbare Batterie eines für das Steuerteil (40) spezifischen Batterietyps zugeordnet ist.

6. Batterieladevorrichtung (10) nach Anspruch 5,
wobei das Leistungsmodul ein einziges Leistungsteil umfasst, und wobei jedes der n Steuerteile (40) über eine Kommunikationsschnittstelle mit dem Leistungsteil (20) in Verbindung steht.

7. Batterieladevorrichtung (10) nach Anspruch 5,
wobei das Leistungsmodul wenigstens zwei Leistungsteile umfasst, und wobei wenigstens ein erstes der n Steuerteile (40) über eine erste Kommunikationsschnittstelle mit dem ersten Leistungsteil (20) in Verbindung steht, und wobei wenigstens ein weiteres der n Steuerteile (40) über eine weitere Kommunikationsschnittstelle mit dem weiteren Leistungsteil (20) in Verbindung steht.

8. Batterieladevorrichtung (10) nach einem der vorhergehenden Ansprüche,
wobei die Batterieladevorrichtung (10) eine Notabschaltung (50) aufweist, die dazu eingerichtet ist, über eine Datenschnittstelle (104a, 104b) Sensordaten eines Temperatursensors zur Temperaturerfassung der Batterietemperatur einer der mehrerer verbundener Batterien (100) zu empfangen und bei Überschreiten eines vorgegebenen Schwellenwertes die Stromversorgung durch die Stromquelle (12) der Batterieladevorrichtung (10) zu deaktivieren.

9. Batterieladesystem umfassend eine Batterieladevorrichtung (10) nach einem der vorhergehenden Ansprüche sowie eine oder mehrere Batterien (100) eines spezifischen Batterietyps, die mit der Batterieladevorrichtung (10) verbindbar sind, um von dieser geladen zu werden.
